# DEMANDE DE BREVET EUROPEEN

(11) **EP 1 289 333 A1**
(43) Date de publication de la demande: **05.03.2003**
(21) Numéro de dépôt: 02292009.4
(22) Date de dépôt: 09.08.2002
(51) Int. Cl.: H04Q 11/00

(54) **Système de commutation optique tel que brasseur ou routeur pour réseau de transmission**

(30) Priorité: 13.08.2001 FR 0110770
(71) Demandeur: ALCATEL, 75008 Paris (FR)
(72) Inventeur: Faure, Jean-Paul, 75014 Paris (FR); Noirie, Ludovic, 91620 Nozay (FR); Le Sauze, Nicolas, 91440 Bures-sur-Yvette (FR)
(74) Mandataire: Sciaux, Edmond

(57) **Abrégé**

Dans un réseau de transmission à fibres optiques des signaux portant les informations à transmettre sont reçus par un système de commutation par l'intermédiaire de ports d'entrée (PA) qui leur imposent des ondes porteuses optiques dont les longueurs d'onde sont propres à ces ports. Ces signaux sont des trames ou des paquets et le système est un brasseur de circuits ou un routeur de paquets selon que le réseau est à fonctionnement synchrone ou asynchrone. Un étage primaire (EA) transmet ces signaux à des ports intermédiaires (PM) en entrée d'un étage secondaire (EZ) qui utilise ces longueurs d'onde pour sélectionner pour chaque signal, selon sa destination et les conditions du trafic, un segment de route allant de l'un de ces ports intermédiaires à un port de sortie (PZ). Selon cette invention l'étage primaire a préalablement effectué une orientation sélective de ce signal vers ce port intermédiaire.

Cette invention s'applique aux télécommunications.

## Description

La présente invention concerne des réseaux qui transmettent des informations entre divers abonnés. Un tel réseau comporte des noeuds et chacun de ces noeuds reçoit des signaux, dits ci-après « d'entrée », qui portent de telles informations et qui proviennent notamment d'autres noeuds du réseau, et il émet, notamment à destination d'autres noeuds du réseau, d'autres tels signaux qui seront dits ci-après « de sortie » et qui sont respectivement équivalents à ces signaux d'entrée en ce sens qu'ils portent les mêmes informations.

Un tel noeud doit permettre au réseau d'établir des correspondances entre d'une part les sources d'où proviennent les signaux d'entrée et d'autre part les destinations vers lesquelles les signaux de sortie équivalents doivent être émis. Il inclut typiquement pour cela les ports d'entrée pour recevoir ces signaux d'entrée, des ports de sortie pour émettre ces signaux de sortie, des moyens de guidage et de diffusion pour former des routes internes permettant de transmettre des signaux équivalents de chacun de ces ports d'entrée à certains au moins de ces ports de sortie, et des moyens de sélection pour sélectionner l'une au moins de ces routes internes pour chacun des ensembles d'informations portés par ces signaux. Le nombre de ces ports de sortie est typiquement le même que celui de ces ports d'entrée. Une « capacité » du système de commutation brasseur routeur est définie : c'est le produit du nombre de ces ports d'entrée par le débit d'information pouvant être transmis par le système de commutation via chacun de ces ports.

Dans les réseaux qui utilisent une transmission du type synchrone, par exemple dans ceux qui utilisent des protocoles connus tels que SDH ou SONET, les signaux qui portent les informations à transmettre sont mis sous la forme de trames. Ces trames sont transmises à l'intérieur du réseau le long de circuits qui sont établis à travers une succession de noeuds et qui peuvent être parfois maintenus pendant plusieurs mois. Le système de commutation du noeud constitue alors un brasseur pour ces circuits et il peut fonctionner d'une manière relativement lente. Dans les réseaux qui utilisent une transmission du type asynchrone, par exemple dans ceux qui utilisent des protocoles connus tels que ATM et IP, les signaux sont mis sous la forme de paquets qui portent chacun, à travers une succession de noeuds, une partie des informations à transmettre et qui peuvent avoir des durées de l'ordre de 125 µs. Le système de commutation du noeud constitue alors un routeur pour ces paquets et il doit fonctionner d'une manière relativement rapide. Dans ces deux types de réseaux, les routes internes à sélectionner sont typiquement définies dans chaque système de commutation par un contrôleur qui commande les moyens de sélection de route. Les informations nécessaires à ce contrôleur pour assurer ses fonctions lui sont notamment fournies par des étiquettes qui sont respectivement propres aux trames ou paquets et qui peuvent par exemple être incluses en tête des paquets ou être portées par des ondes affectées à cette fonction. Lorsque le système de commutation est un routeur, certaines de ses routes internes peuvent inclure en série des éléments de retard qui permettent à ce contrôleur de définir diverses valeurs de retard à appliquer respectivement aux divers paquets. Il en résulte que l'ordre de succession des paquets peut ne pas être le même en sortie d'un tel routeur qu'à son entrée.

Cette invention concerne notamment les réseaux de transmission utilisant des fibres optiques. Dans un tel réseau les signaux qui portent les informations à transmettre sont optiques, c'est à dire qu'ils sont portés par des ondes lumineuses. Les longueurs d'onde des ondes portant un signal peuvent différer d'un point à l'autre du réseau.

Pour porter les signaux entre ses ports d'entrée et ses ports de sortie chaque système de commutation d'un tel réseau utilise des ondes porteuses dont les longueurs d'onde constituent des longueurs d'onde de travail de ce système. Ses moyens de sélection de route peuvent inclure des interrupteurs, qui sont usuellement constitués par des amplificateurs optiques à semiconducteurs, des sélecteurs, qui sélectionnent au moins un trajet parmi plusieurs trajets possibles pour une onde porteuse et qui peuvent être de divers types, des filtres accordables, etc.

Lors de la réalisation d'un réseau de transmission utilisant un tel système de commutation , il est souhaité que le nombre des abonnés pouvant utiliser ce réseau soit grand et que de plus il puisse facilement être ultérieurement accru. Il en est de même pour le débit d'informations pouvant être transmis entre ces abonnés, et donc aussi pour la capacité des systèmes inclus dans ce réseau. Il est de plus souhaité que chacun de ces systèmes soit strictement non bloquant. Pour un brasseur, cela signifie que, si tous ses ports d'entrée sauf un sont connectés à tous ses ports de sortie sauf un, quel que soit le port d'entrée resté libre, et quel que soit le port de sortie resté libre, celui-ci peut être connecté à celui-là sans perturber les autres connexions déjà établies. Pour un routeur, cela signifie que, quelque soit le port d'entrée qui reçoit un paquet, ce paquet puisse être transmis à n'importe lequel des ports de sortie même alors que d'autres paquets sont transmis entre d'autres ports d'entrée et de sortie. Mais un accroissement de la capacité d'un tel système de commutation de type connu nécessite alors notamment un accroissement du nombre des routes internes entre lesquelles la puissance de chaque onde porteuse doit être répartie par les moyens de diffusion de ce système de commutation brasseur routeur, et la diminution correspondante du rapport signal sur bruit ne peut être qu'imparfaitement compensée par des amplificateurs qui introduisent leurs propres bruits d'émission spontanée amplifiée.

Un tel brasseur est connu par un article « Towards a wide scale all-optical transparent networking: the ACTS Optical Pan European Network (OPEN) project », Michel Chbat et al., invited paper in IEEE Journal on Selected Area in Communications, Vol. 16, N° 7, September 1998. Il présente notamment l'inconvénient d'avoir des pertes d'insertion élevées en raison des coupleurs, ces pertes augmentant considérablement avec l'accroissement de sa capacité.

Un premier tel routeur est connu par un article « A 2.56-Tb/s Multiwavelength and Scalable Switch-Fabric for Fast Packet-Switching Networks », Yoshiharu Maeno et al., IEEE Photonics Technology Letters, vol. 10, n°8, August 1998. Il présente notamment l'inconvénient de ne pas permettre de sélectionner une durée de trajet pour chacun des paquets.

Un deuxième tel routeur est connu par un article « A 160 Gbit/s throughput photonic switch for fast packet switching systems », D. Chiaroni, D. de Bouard, C. Chauzat, J.C. Jacquinot, D. Bayart, P. Bousselet, M. Bachman and M. Sotom, Photonics In Switching, 1977, Technical Digest Series, vol. 10, p 37- 40. Il présente notamment l'inconvénient que le nombre des interrupteurs optiques nécessaires à sa réalisation croît fortement avec l'accroissement de sa capacité.

L'article de JIN Y ET AL : «AN OPTICAL CROSS6CONNECT SYSTEM AS A HIGH SPEED SWITCHING CORE AND ITS PERFORMANCE ANALYSIS » JOURNAL OF LIGHTWAVE TECHNOLOGY , IEEE, NEW YORK, US, vol . 14, N°6, 1juin 1996, PAGE 1184, décrit un système de commutation qui présente les dispositions suivantes: II inclut un étage primaire pour distribuer des paquets ayant des longueurs d'onde respectives à une pluralité d'entrées d'un étage secondaire de ce système de commutation brasseur routeur. Cet étage secondaire utilise notamment ces longueurs d'onde pour sélectionner pour chacun de ces paquets au moins une route parmi une pluralité de routes internes, chacune de ces routes internes traversant ce système de commutation brasseur routeur et incluant pour cela un segment primaire inclus dans cet étage primaire et un segment secondaire inclus dans cet étage secondaire. Cet étage secondaire se laisse traverser par ces paquets seulement selon les segments secondaires des routes internes respectivement sélectionnées pour eux. Son étage primaire oriente sélectivement les paquets sur les segments primaires de celles de ses routes internes qui sont sélectionnées pour eux par son étage secondaire.

La présente invention a notamment pour but de permettre d'accroître la capacité d'un tel système de commutation brasseur routeur et/ou de limiter le coût de sa réalisation et/ou de l'accroissement ultérieur éventuel de cette capacité, et cela tout en limitant le risque de diminution du rapport signal sur bruit.

L'objet de l'invention est un système de commutation optique tel que brasseur ou routeur pour réseau de transmission, ce système de commutation incluant un étage primaire pour distribuer des signaux ayant des longueurs d'onde respectives à une pluralité d'entrées d'un étage secondaire de ce système de commutation, cet étage secondaire utilisant notamment ces longueurs d'onde pour sélectionner pour chacun de ces signaux au moins une route parmi une pluralité de routes internes, chacune de ces routes internes traversant ce système de commutation et incluant pour cela un segment primaire inclus dans cet étage primaire et un segment secondaire inclus dans cet étage secondaire, cet étage secondaire se laissant traverser par ces signaux seulement selon les dits segments secondaires des routes internes respectivement sélectionnées pour eux, ledit étage primaire orientant sélectivement ces signaux sur les segments primaires de celles des dites routes internes qui sont sélectionnées pour eux ; ce système de commutation étant adapté à être inclus dans un réseau de transmission d'informations acheminant des dits signaux, chacun de ces signaux portant des informations à transmettre et étant muni d'une étiquette, ce système de commutation ayant une succession de longueurs d'onde de travail et incluant :
- une pluralité de ports recevant des dits signaux en entrée de ce système et constituant respectivement des ports d'entrée, ces ports ayant des longueurs d'onde respectives constituées chacune par l'une des dites longueurs d'onde de travail, chacun de ces ports répondant à la réception de chaque dit signal d'abord en faisant porter ce signal par une onde optique ayant ladite longueur d'onde de ce port, puis en transmettant dans ce système ce signal porté par cette onde, ladite longueur d'onde de cette onde constituant ladite longueur d'onde de ce paquet, ces ports formant au moins un groupe de ports d'entrée, chaque dit groupe de ports d'entrée incluant plusieurs de ces ports, les dites longueurs d'onde des divers ports de chaque dit groupe de ports d'entrée étant mutuellement différentes,
- une pluralité de ports constituant respectivement des ports intermédiaires, ces ports formant au moins un groupe de ports intermédiaires, chaque dit groupe de ports intermédiaires incluant plusieurs de ces ports et étant associé à un dit groupe de ports d'entrée,
- une pluralité de ports constituant respectivement des ports de sortie,
- des segments de route constituant une pluralité de dits segments primaires et une pluralité de dits segments secondaires, chacun de ces segments ayant une longueur d'onde constituée par l'une des dites longueurs d'onde de travail, ce segment reliant mutuellement deux dits ports de manière à pouvoir transmettre de l'un à l'autre de ces deux ports des dits signaux ayant cette longueur d'onde, ces deux ports constituant respectivement un port amont et un port aval de ce segment, les dits ports amont et aval de chaque dit segment primaire étant respectivement un dit port d'entrée et un dit port intermédiaire, un groupe de segments primaires incluant plusieurs de ces segments primaires étant associé à chaque dit groupe de ports d'entrée et au dit groupe de ports intermédiaires associé à ce groupe de ports d'entrée, ce groupe de segments primaires reliant chacun des ports de ce groupe de ports d'entrée à chacun des ports de ce groupe de ports intermédiaires, les dits port amont et port aval de chaque dit segment secondaire étant respectivement un dit port intermédiaire et un dit port de sortie, chacun des dits ports intermédiaires étant relié à une pluralité au moins partielle de dits ports de sortie respectivement par une pluralité au moins partielle de dits segments secondaires, chacun des dits ports de sortie étant relié à une pluralité au moins partielle de dits ports intermédiaires respectivement par une pluralité au moins partielle de dits segments secondaires,
- un contrôleur apte à répondre à ladite étiquette de chaque signal reçu par chaque dit port d'entrée en fournissant un ordre de sélection associé à ce signal et désignant la dite longueur d'onde de ce signal et au moins une paire de ports, chaque paire de ports désignée par cet ordre étant constituée par un dit port intermédiaire et par un dit port de sortie, grâce à quoi chacun de ces deux ports est lui aussi désigné par cet ordre, et
- des moyens de sélection de route inclus dans ledit étage secondaire et formant une pluralité de sélecteurs de ports et une pluralité de sélecteurs de longueur d'onde ; des moyens de sélection de route étant aussi inclus dans ledit étage primaire et formant une pluralité de sélecteurs primaires, chacun de ces sélecteurs primaires conditionnant plusieurs dits segments primaires ayant un même dit port amont constitué par un dit port d'entrée et constituant un port amont de ce sélecteur, ce sélecteur ayant plusieurs dits ports aval respectivement constitués par plusieurs dits ports intermédiaires et constituant respectivement des ports aval de ces segments, ce sélecteur étant apte à recevoir chaque dit ordre de sélection désignant l'un au moins de ses dits ports aval et à répondre à cet ordre en sélectionnant chaque dit segment primaire reliant ledit port amont de ce sélecteur à chaque dit port aval appartenant à ce sélecteur et désigné par cet ordre, ces moyens de sélection de route étant tels que chaque dit segment primaire transmet à son dit port aval chaque dit signal reçu par son dit port amont sélectivement lorsque ce segment est sélectionné par chaque dit sélecteur primaire conditionnant ce segment, chacun des segments de chaque dit groupe de segments primaires étant conditionné par au moins un dit sélecteur primaire, grâce à quoi ceux des dits sélecteurs primaires qui conditionnent les segments de ce groupe constituent avec ces segments une unité de prégroupage transmettant chaque dit signal reçu par elle sélectivement à chaque dit port intermédiaire via lequel ce signal doit traverser ce système de commutation, cette unité étant associée à ce groupe de segments et aux dits groupe de ports d'entrée et groupe de ports intermédiaires associés à ce groupe de segments, les ports de ce groupe de ports d'entrée et de ce groupe de ports intermédiaires constituant respectivement des ports d'entrée et des ports intermédiaires de cette unité ;chaque dite unité de prégroupage incluant :

- un dit sélecteur primaire pour chacun des dits ports d'entrée de cette unité, ce sélecteur ayant une entrée raccordée à ce port d'entrée et ayant une sortie pour chacun des dits ports intermédiaires de cette unité, cette sortie étant associée à ce port intermédiaire, ce sélecteur étant apte à répondre à chaque dit ordre de sélection désignant l'un de ces ports intermédiaires en raccordant cette entrée à celle de ces sorties qui est associée à ce port intermédiaire, et
- un organe de groupage pour chaque dit port intermédiaire de cette unité, cet organe ayant une sortie raccordée à ce port intermédiaire et ayant une entrée pour chaque dit sélecteur primaire de cette unité, cette entrée étant raccordée à celle des dites sorties de ce sélecteur qui est associée à ce port intermédiaire, cet organe raccordant cette sortie à chacune de ces entrées ; ce système étant caractérisé par le fait que chaque dit organe de groupage est un multiplexeur, les dites entrées de ce multiplexeur ayant des longueurs d'onde respectives et étant respectivement raccordées à des dites sorties de sélecteurs primaires ayant des entrées raccordées à des ports d'entrée ayant ces longueurs d'onde.

Le système ainsi caractérisé présente l'avantage d'être particulièrement bien adapté à l'utilisation de commutateurs électro-holographiques pour sa construction.

A l'aide des figures schématiques ci-jointes, on va exposer ci-après par des exemples comment cette invention peut être mise en oeuvre. Lorsqu'un même élément ou un élément assurant des mêmes fonctions est représenté sur plusieurs de ces figures, il y est désigné par les mêmes lettres et/ou chiffres de référence.
La figure 1 représente le brasseur connu précédemment mentionné.
La figure 2 représente un brasseur constituant un premier système de commutation réalisé selon cette invention.
La figure 3 représente une unité du brasseur de la figure 2
La figure 4 représente le deuxième routeur connu précédemment mentionné.
La figure 5 représente un routeur constituant un deuxième système de commutation réalisé selon cette invention.
La figure 6 représente un premier mode de réalisation d'une matrice de commutation interne du routeur de la figure 5.
La figure 7 représente un deuxième mode de réalisation de la même matrice de commutation interne.
Sur ces figures des guides de lumière sont représentés en traits simples et des faisceaux de lumière non guidés sont représentés en traits doubles.

Dans le but de faciliter la compréhension du dessin, les systèmes de commutation représentés tels que brasseurs ou routeurs ont tous un petit nombre de ports d'entrée et un nombre de ports de sortie égal à celui de ces ports d'entrée. Mais cette invention trouve avantageusement application pour des valeurs plus élevées de ces deux nombres et ces derniers peuvent être différents l'un de l'autre. Dans le même but certains amplificateurs optiques n'ont pas été représentés. Mais de tels amplificateurs sont en fait nécessaires pour compenser les pertes de puissance optique subies par les paquets en amont de ces systèmes de commutation et dans ceux-ci.

Certaines dispositions présentées par des systèmes de commutation tels que brasseurs ou routeurs vont tout d'abord être décrites. Elles sont communes au brasseur et au routeur connus précédemment mentionnés et aux deux systèmes de commutation réalisés selon cette invention.

Selon ces dispositions communes, un tel système de commutation est adapté à être inclus dans un réseau de transmission d'informations acheminant des signaux. Ces signaux constituent respectivement des trames ou des paquets et ce réseau est organisé selon un mode de transfert synchrone ou asynchrone selon qu'il s'agit d'un brasseur ou d'un routeur. Chacun de ces signaux porte des informations à transmettre et il est muni d'une étiquette de routage. Dans le mode de transfert synchrone, les trames se succèdent, le long d'une succession de segments du réseau constituant une connexion, de façon continue et uniforme et avec des intervalles de temps réguliers et indépendant du trafic du réseau. Dans le mode de transfert asynchrone les paquets se succèdent en divers points du réseau avec des intervalles de temps qui dépendent du trafic du réseau et qui ne sont donc pas nécessairement uniformes. Typiquement ce réseau utilise des fibres optiques pour transmettre les paquets de l'un à l'autre de ses noeuds.

Ce système de commutation est optique en ce sens que ces signaux y sont maintenus et restitués sous forme optique, c'est à dire que chaque signal transitant dans ce système y est à chaque instant porté par une onde porteuse optique. Typiquement c'est aussi sous forme optique que ces signaux sont reçus et transmis. Mais un tel signal pourrait être reçu, ou transmis en sortie du système, sous une forme différente, par exemple sous forme électrique.

Ce système de commutation inclut les éléments suivants :
- Une pluralité de ports recevant des signaux en entrée du système et constituant respectivement des ports d'entrée tels que PA. Ces ports ont des longueurs d'onde respectives qui sont constituées chacune par l'une des longueurs d'onde de travail du système. Chacun d'eux répond à la réception de chaque signal d'abord en faisant porter ce signal par une onde optique ayant la longueur d'onde de ce port, puis en transmettant ce signal vers les autres éléments du système. Pendant tout le reste de son parcours dans le système, ce signal restera porté par cette onde,et la longueur d'onde de cette dernière constituera une longueur d'onde de ce signal. Pour que ce signal ait une telle longueur d'onde en sortie d'un tel port alors qu'en entrée de ce port, s'il était sous forme optique, sa longueur d'onde de support est le plus souvent différente de la longueur d'onde de ce port, et pour que, de plus, il retrouve une qualité de signal convenable après des dégradations subies en ligne, les ports d'entrée sont typiquement constitués par des régénérateurs de type connu réalisant en outre une conversion de longueur d'onde.

Dans le cas d'un réseau utilisant des multiplex, plusieurs ports d'entrée peuvent être alimentés par une même fibre optique amont guidant un tel multiplex, c'est à dire que ces ports peuvent être respectivement associés aux canaux de ce multiplex pour recevoir chacun les signaux qui sont transmis par cette fibre dans le canal associé. Dans le cas d'un multiplex spectral, ces ports reçoivent chacun les signaux ayant dans ce multiplex une longueur d'onde à laquelle ce port est associé du coté amont.

Dans tous les cas les ports d'entrée forment au moins un groupe incluant plusieurs de ces ports. Un tel groupe de ports d'entrée est typiquement formé par les ports qui sont alimentés par une même fibre optique amont. Trois tels groupes sont ainsi formés dans le cas du premier système réalisé selon cette invention et un seul tel groupe dans le cas du deuxième. Les longueurs d'onde des divers ports de chaque tel groupe sont mutuellement différentes.
- Une pluralité de ports constituant respectivement des ports intermédiaires tels que PM. Ces ports forment au moins un groupe de ports intermédiaires. Chaque tel groupe inclut plusieurs de ces ports et est associé à un groupe de ports d'entrée.
- Une pluralité de ports constituant respectivement des ports de sortie tels que PZ.
- Des segments de route constituant une pluralité de segments primaires tels que VA et une pluralité de segments secondaires tels que VZ. Chacun de ces segments a une longueur d'onde constituée par l'une des longueurs d'onde de travail du système et il relie mutuellement deux ports du système de manière à pouvoir transmettre de l'un à l'autre de ces deux ports des signaux ayant cette longueur d'onde, ces deux ports constituant respectivement un port amont et un port aval de ce segment. Chacun de ces segments est typiquement réalisé sous la forme d'une succession de trajets de lumière s'étendant de son port amont à son port aval. Un tel trajet peut être réalisé sous la forme d'un faisceau de lumière, d'une fibre optique, ou d'un guide de lumière intégré à un substrat. Chacun des trajets d'une telle succession constitue alors un support du segment formé par cette succession. Mais il constitue aussi typiquement un support d'autres tels segments, ceci par exemple parce qu'il est disposé dans le système de manière à transmettre successivement des signaux ayant diverses longueurs d'onde définissant chacune un tel segment, ou, s'il transmet seulement des signaux ayant tous une même longueur d'onde, parce qu'il est inclus dans plusieurs telles successions de trajets supportant respectivement plusieurs segments ayant cette longueur d'onde. Les ports amont et aval de chaque segment primaire sont respectivement un port d'entrée et un port intermédiaire. Un groupe de segments primaires incluant plusieurs de ces segments primaires est associé à chaque groupe de ports d'entrée et au groupe de ports intermédiaires associé à ce groupe de ports d'entrée. Ce groupe de segments primaires relie chacun des ports de ce groupe de ports d'entrée à chacun des ports de ce groupe de ports intermédiaires. Les port amont et port aval de chaque segment secondaire sont respectivement un port intermédiaire et un port de sortie. Chacun des ports intermédiaires est relié à une pluralité au moins partielle de ports de sortie respectivement par une pluralité au moins partielle de segments secondaires, et chacun des ports de sortie est relié à une pluralité au moins partielle de ports intermédiaires respectivement par une pluralité au moins partielle de segments secondaires.
- Un contrôleur H apte à répondre à l'étiquette de chaque signal reçu par chaque port d'entrée en fournissant un ordre de sélection associé à ce signal. Cet ordre désigne la longueur d'onde de ce signal et au moins une paire de ports, chaque paire de ports ainsi désignée étant constituée par un port intermédiaire et par un port de sortie. Il sera considéré ci-après que chacun de ces deux ports est lui aussi désigné par cet ordre. Ce contrôleur est sensible à la fois aux étiquettes de routage des signaux reçus par le système et à des données de trafic reçues par ailleurs du réseau de transmission. Il est typiquement constitué par un ensemble électronique de traitement d'information. Il reçoit les données de ces étiquettes par l'intermédiaire de coupleurs optiques et de transducteurs optoélectroniques non représentés. Ces coupleurs sont placés en amont de l'étage primaire EA et éventuellement en amont des ports d'entrée.
- Enfin des moyens de sélection de route inclus dans l'étage secondaire. Ces moyens peuvent être de divers types. Leur fonctionnement est tel qu'ils forment pour les signaux une pluralité de sélecteurs de ports tels que SP et une pluralité de sélecteurs de longueur d'onde tels que SC.

Chacun de ces sélecteurs de ports conditionne plusieurs segments secondaires, c'est à dire qu'il intervient sur les trajets de lumière supportant ces segments de manière à tantôt permettre et tantôt empêcher la transmission de signaux par ces segments. Il a des ports amont et aval qui sont respectivement constitués par les ports amont et aval de ces segments, l'un au moins des nombres respectifs de ces ports amont et de ces ports aval étant supérieur à un. Ce sélecteur a aussi des paires de ports qui sont constituées chacune par l'un de ces ports amont et par l'un de ces ports aval. Il reçoit chaque ordre de sélection désignant l'une au moins de ces paires de ports et il répond à cet ordre en sélectionnant chaque segment de route reliant les deux ports de chaque paire de ports désignée par cet ordre. Un tel sélecteur de ports est typiquement réalisé sous la forme d'un sélecteur de trajet, c'est à dire qu'il réalise des raccordements commandés entre des trajets de lumière.

Chacun des sélecteurs de longueur d'onde tels que SC conditionne une pluralité de segments secondaires ayant des longueurs d'onde respectives diversifiées. Il reçoit chaque ordre de sélection désignant l'une au moins de ces longueurs d'onde et il répond à cet ordre en sélectionnant dans cette pluralité de segments chaque segment secondaire ayant une longueur d'onde désignée par cet ordre. Un tel sélecteur de longueur d'onde peut être réalisé sous la forme d'un sélecteur de trajet réalisant des raccordements commandés entre divers trajets de lumière dont certains sont réservés à certaines longueurs d'onde à cause de la présence, dans les segments supportés par ces trajets, d'éléments spectralement sélectifs s'opposant à la transmission de signaux ayant d'autres longueurs d'onde. Il peut aussi être réalisé sous la forme d'un filtre spectral commandé placé sur un tel trajet.

Chaque segment secondaire transmet à son port aval chaque signal reçu par son port amont seulement lorsque ce segment est sélectionné par chaque sélecteur conditionnant ce segment. Chaque segment secondaire est conditionné par au moins un sélecteur de ports et par au moins un sélecteur de longueur d'onde de manière que les moyens de sélection de route répondent à chaque ordre de sélection associé à un signal en sélectionnant à la fois chaque paire de ports et chaque longueur d'onde désignées par cet ordre. Il en résulte que ces moyens sélectionnent alors au moins une route interne pour ce signal, chaque telle route sélectionnée partant d'un port d'entrée ayant une telle longueur d'onde sélectionnée, puis passant par le port intermédiaire constituant le port amont d'une telle paire sélectionnée, et enfin arrivant au port de sortie constituant le port aval de cette paire.

L'étage primaire des systèmes de commutation connus tels que brasseurs ou routeurs n'inclut pas de tels moyens de sélection de route. Un système de commutation réalisé selon cette invention est caractérisé par le fait que des moyens de sélection de route sont aussi inclus dans l'étage primaire et forment une pluralité de sélecteurs primaires tels que SA. Chacun de ces sélecteurs primaires conditionne plusieurs segments primaires ayant un même port amont constitué par un port d'entrée et constituant un port amont de ce sélecteur. Ce sélecteur a aussi plusieurs ports aval respectivement constitués par plusieurs ports intermédiaires constituant respectivement les ports aval de ces segments. Il reçoit chaque ordre de sélection désignant l'un au moins de ses ports aval et il répond à cet ordre en sélectionnant, pour chaque port aval lui appartenant et désigné par cet ordre, chaque segment primaire reliant son port amont à ce port aval. Ces moyens de sélection de route sont tels que chaque segment primaire transmet à son port aval chaque signal reçu par son port amont sélectivement lorsque ce segment est sélectionné par chaque sélecteur primaire conditionnant ce segment.
Chacun des segments tels que VA de chaque groupe de segments primaires est conditionné par au moins un sélecteur primaire tel que SA. Il en résulte que ceux des sélecteurs primaires qui conditionnent les segments de ce groupe constituent avec ces segments une unité de prégroupage telle que UA qui, pour chaque signal reçu par elle à partir des ports d'entrée, transmet sélectivement ce signal à celui ou à ceux des ports intermédiaires tels que PM via lequel ou lesquels ce signal doit traverser le système. Cette unité est associée à la fois à ce groupe de segments et aux deux groupes de ports d'entrée et de ports intermédiaires associés à ce groupe de segments, et les ports de ce groupe de ports d'entrée et de ce groupe de ports intermédiaires constituent respectivement des ports d'entrée et des ports intermédiaires de cette unité.

De préférence chaque unité de prégroupage telle que UA inclut les éléments suivants :
- Un sélecteur primaire tel que SA pour chacun des ports d'entrée tels que PA de cette unité. Ce sélecteur a une entrée raccordée à ce port d'entrée et il a une sortie pour chacun des ports intermédiaires tels que PM de cette unité, cette sortie étant associée à ce port intermédiaire. Il répond à chaque ordre de sélection désignant l'un de ces ports intermédiaires en raccordant cette entrée à celle de ces sorties qui est associée à ce port intermédiaire.
- Et un organe de groupage tel que MA pour chaque port intermédiaire de cette unité. Cet organe a une sortie raccordée à ce port intermédiaire et il a une entrée pour chaque sélecteur primaire de cette unité, cette entrée étant raccordée à celle des sorties de ce sélecteur qui est associée à ce port intermédiaire. Il raccorde en permanence cette sortie à chacune de ces entrées.

Le nombre des ports d'entrée de chaque groupe, et celui des sélecteurs primaires tels que SA inclus dans chaque unité de prégroupage, sont typiquement tous deux égaux au nombre m des longueurs d'onde de travail du système de commutation brasseur routeur, nombre qui est par exemple 40 ou 80.

Chaque organe de groupage d'une unité de prégroupage peut être constitué par un combineur optique. Mais il l'est de préférence par un multiplexeur tel que MA. Ses entrées ont alors des longueurs d'onde respectives et elles doivent donc être respectivement raccordées à des sorties de sélecteurs primaires tels que SA ayant des entrées raccordées à des ports d'entrée tels que PA ayant ces mêmes longueurs d'onde.

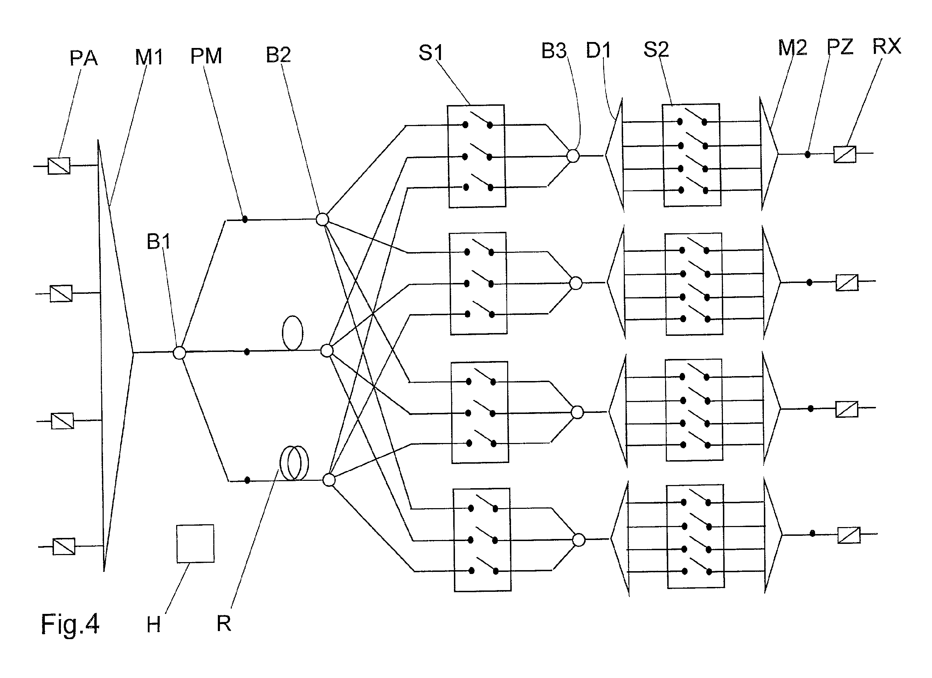

Selon un autre mode de réalisation représenté à la figure 3, l'unité de prégroupage UA est formée dans une matrice de prégroupage incluant des sélecteurs élémentaires tels que W1-1... W2-3. Ces sélecteurs sont aptes à recevoir et à transmettre les signaux. Ils sont aussi aptes à recevoir des ordres de sélection émis par le contrôleur H et à être chacun dans un état dit ci-après « passif » ou dans un état dit ci-après « actif » selon ces ordres. Ils ont des longueurs d'onde respectives. Ils forment des successions qui définissent respectivement des rangées de cette matrice.

Certaines de ces rangées constituent des colonnes de cette matrice, des premiers éléments de ces colonnes étant respectivement constitués par les ports d'entrée tels que PA de cette unité et des éléments suivants de chacune de ces colonnes étant respectivement constitués par les sélecteurs de l'une de ces successions telle que W1-1...W1-3,. D'autres de ces rangées telles que W1-3, W2-3...constituent des lignes de cette matrice, des premiers éléments de chacune de ces lignes étant respectivement constitués par les sélecteurs de l'une de ces successions telle que W1-3, W2-3...et des derniers éléments de ces lignes étant respectivement constitués par les ports intermédiaires de cette unité. Chacun des sélecteurs élémentaires est inclus dans l'une des colonnes et dans l'une des lignes de la matrice.

Pour décrire le fonctionnement de la matrice, chacun des sélecteurs élémentaires sera provisoirement appelé : « sélecteur récepteur » lorsqu'il reçoit un signal. Ce sélecteur récepteur appartient à deux rangées de la matrice, une colonne et une ligne, et ce signal lui est transmis par un élément précédant ce sélecteur récepteur dans de l'une de ces deux rangées. Ce sélecteur récepteur répond à la réception de ce signal en réalisant une opération de transmission interne transmettant ce signal à l'élément suivant ce sélecteur récepteur dans l'une de ces deux mêmes rangées. Dans les cas où ce sélecteur récepteur est passif et/ou sa longueur d'onde est différente de celle du signal reçu, la rangée de cet élément suivant est la même que celle de cet élément précédant, c'est à dire que ces deux rangées sont toutes deux constituées par la colonne ou par la ligne du sélecteur récepteur. Cette opération de transmission interne constitue alors une transmission passive. Dans les cas où, à la fois, ce sélecteur récepteur est actif et sa longueur d'onde est celle du signal reçu, la rangée de cet élément suivant est différente de celle de cet élément précédant, c'est à dire en pratique que ces deux rangées sont respectivement constituées par la ligne et par la colonne du sélecteur récepteur. Cette opération de transmission interne constitue alors une transmission déviée.

Dans ce mode de réalisation les sélecteurs primaires SA de l'unité de prégroupage UA sont respectivement constitués par les colonnes de la matrice de prégroupage et les sorties de chacun de ces sélecteurs primaires sont respectivement constituées par les sélecteurs élémentaires inclus dans ce sélecteur primaire. Les organes de groupage tels que MA de cette unité sont respectivement constitués par les successions de sélecteurs élémentaires telles que W1-3, W2-3... respectivement incluses dans les lignes de cette matrice et les entrées de chacun de ces organes de groupage sont respectivement constituées par les sélecteurs élémentaires inclus dans cet organe.

Typiquement les sélecteurs élémentaires de la matrice de prégroupage sont respectivement constitués par des commutateurs électroholographiques. Un tel commutateur est décrit dans un article : A. J. Agranat,.« Electroholographic switches are fast and compact », Laser Focus World, May 2001, pp 109-111. Chaque tel commutateur comporte un réseau de Bragg inscrit d'une manière latente dans un cristal photo-réfractif à faces parallèles du type KLTN qui est muni d'électrodes. Ce réseau définit une longueur d'onde du commutateur. Il est actif, c'est à dire qu'il se matérialise par des variations locales de l'indice de réfraction du cristal, lorsqu'une tension convenable est appliquée entre ces électrodes, par exemple sur commande du contrôleur H. Le commutateur est alors dit « actif ». Il est dit « passif » si aucune telle tension n'est appliquée. Lorsqu'un faisceau lumineux, notamment un tel faisceau portant un signal, est dirigé vers le cristal photo-réfractif, il traverse ce cristal sans être globalement dévié si le commutateur est passif ou si ce faisceau a une longueur d'onde différente de celle de ce commutateur. Mais il est dévié par diffraction si, à la fois, sa longueur d'onde est la même que celle du commutateur et ce dernier est actif.

Diverses dispositions sont communes au premier système de commutation réalisé selon cette invention, système qui constitue un brasseur de circuits, et au brasseur connu précédemment mentionné. Ces dispositions vont être décrites ci-après.

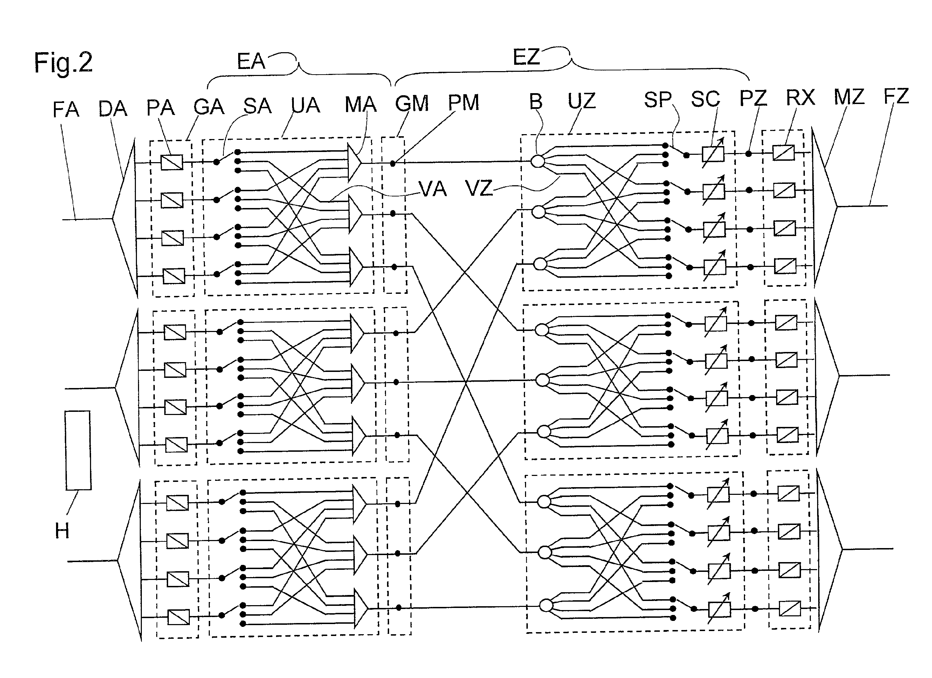

L'étage primaire EA du brasseur inclut un nombre plus grand que un d'unités de prégroupage telle que UA, ces unités étant respectivement associées au même nombre de groupes de ports d'entrée tels que GA et au même nombre de groupes de ports intermédiaires tels que GM. Sur la figure 2, pour faciliter la compréhension du dessin, ce nombre d'unités de prégroupage et de groupes est représenté égal à trois. Dans des cas réels typiques il peut être égal à quatre ou six.

Typiquement certains au moins des groupes de ports d'entrée reçoivent chacun des signaux transmis par une fibre de ligne amont telle que FA, qui appartient au même réseau que le brasseur et dans laquelle ces signaux sont multiplexés en longueur d'onde. Chacun des ports d'un tel groupe reçoit les signaux qui sont transmis par l'une des sorties d'un démultiplexeur tel que DA et qui forment typiquement des trames.

L'étage secondaire EZ inclut une pluralité d'unités de sortie telles que UZ. Le nombre de ces unités est typiquement égal à celui des unités de prégroupage telles que UA. Pour chacune de ces unités de sortie, chacune de ces unités de prégroupage inclut alors au moins un organe de groupage tel que MA associé à cette unité de sortie. Dans ce premier brasseur, elle inclut un seul tel organe.

Quel que soit leur nombre, chacune des unités de sortie telles que UZ est raccordée à une pluralité de ports intermédiaires tels que PM et à une pluralité de ports de sortie tels que PZ et elle inclut les éléments suivants :
- Un diffuseur tel que B pour chacun de ces ports intermédiaires. Ce diffuseur a une entrée raccordée à ce port intermédiaire et une sortie pour chacun de ces ports de sortie.
- Un sélecteur de port tel que SP pour chacun de ces ports de sortie. Ce sélecteur a une entrée pour chacun des diffuseurs de cette unité, cette entrée étant raccordée à ce diffuseur. Il a en outre une sortie.
- Enfin un sélecteur de longueur d'onde tel que SC pour chacun de ces sélecteurs de port. Ce sélecteur de longueur d'onde a d'une part une entrée raccordée à la sortie de ce sélecteur de port et d'autre part une sortie, cette sortie constituant une sortie de cette unité de sortie et un port de sortie raccordé à cette unité.

Selon cette disposition un sélecteur de port et un sélecteur de longueur d'onde sont affectés à chaque port de sortie tel que PZ. Ce sélecteur de port sélectionne un port intermédiaire tel que PM et ce sélecteur de longueur d'onde sélectionne un port d'entrée tel que PA. Ce sélecteur de longueur d'onde est par exemple réalisé sous la forme d'un filtre accordable.

Ce brasseur inclut en outre les éléments suivants :
- Un convertisseur de longueur d'onde tel que RX pour chaque sortie telle que PZ de chaque unité de sortie telle que UZ. Ce convertisseur a d'une part une entrée raccordée à cette sortie et d'autre part une sortie.
- Et un multiplexeur de sortie tel que MZ ayant une entrée pour chaque tel convertisseur de longueur d'onde, cette entrée étant raccordée à la sortie de ce convertisseur. La sortie de ce multiplexeur alimente une fibre de ligne aval telle que FZ appartenant au réseau.

De même que les convertisseurs des ports d'entrée, ces convertisseurs de sortie ont des longueurs d'onde respectives qu'ils imposent en tant que longueurs d'onde de support aux signaux qu'ils transmettent. Ces longueurs d'onde sont typiquement prédéterminées et elles sont choisies pour permettre la suite de l'acheminement de ces signaux dans le réseau, dans le cadre du multiplex de longueurs d'onde formé par un multiplexeur de sortie tel que MZ. Ce multiplexeur reçoit les signaux provenant de plusieurs convertisseurs de longueur d'onde tels que RX dont les longueurs d'onde de sortie sont étagées.

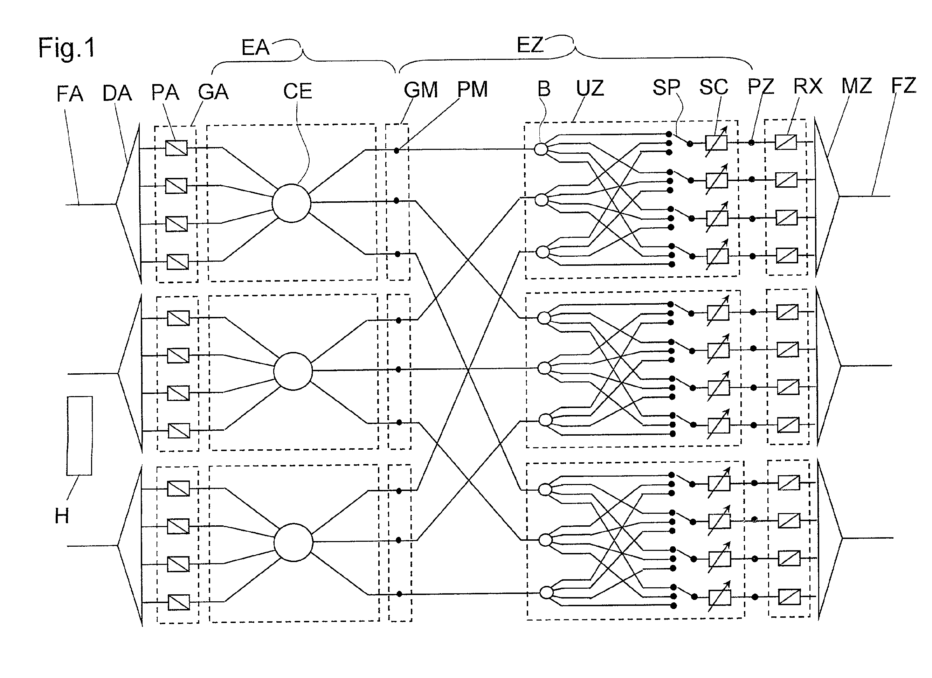

Comme cela apparaît de la comparaison des figures 1et 2, le brasseur réalisé selon cette invention se différencie du brasseur connu précédemment mentionné par le fait que, pour chaque groupe de ports d'entrée, l'étage primaire EA est constitué par une unité de prégroupage telle que UA alors que, dans ce brasseur connu, il était constitué par un coupleur en étoile tel que CE.

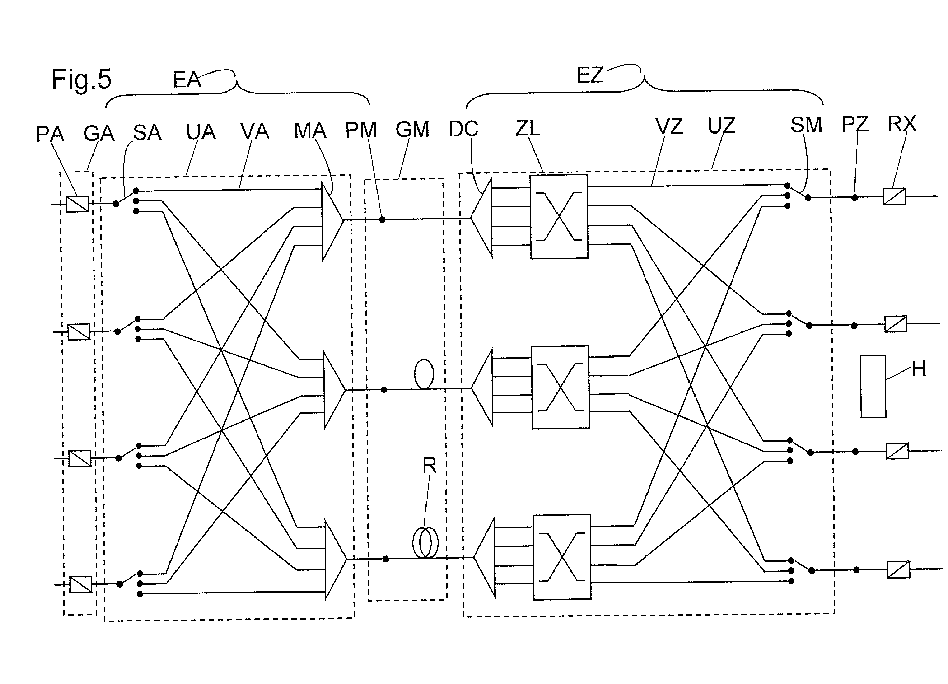

Le deuxième système de commutation réalisé selon cette invention est destiné à traiter des signaux se présentant sous la forme de paquets. Il constitue un routeur pour ces paquets. Il inclut par exemple, comme représenté à la figure 5, une seule unité de prégroupage UA qui constitue donc à elle seule l'étage primaire EA de ce routeur. Cette unité peut avantageusement être réalisée des manières précédemment décrites. Diverses dispositions avantageuses dans certains cas et mises en oeuvre dans ce routeur vont être décrites ci-après.

Les ports intermédiaires tels que PM incluent des éléments de retard tels que R qui leur donnent des retards respectifs prédéterminés. Ces retards appartiennent à une succession de retards de ce routeur. Chacun de ces ports applique son retard à chacun des paquets qui passent par lui.

Le nombre k des retards mutuellement différents appliqués par l'ensemble à retards est choisi en fonction des caractéristiques du trafic du réseau incluant le routeur. Pour simplifier le dessin, il est représenté sur la figure comme égal à trois. Dans les routeurs réels il est typiquement voisin de 16 et généralement inférieur à 32. Ces retards forment une succession dans laquelle ils ont des rangs respectifs, cette succession débutant par un premier retard. Typiquement cette succession est régulière, c'est à dire que, sauf ce premier retard, chacun de ces retards est égal à un retard précédent augmenté d'un incrément de retard prédéterminé indépendant du rang de ce retard précédent. De préférence, sensiblement, le premier retard est nul de sorte que chaque retard est égal à l'incrément de retard multiplié par le rang de ce retard diminué de un. Cet incrément de retard est choisi en fonction du format des paquets et des caractéristiques du trafic prévu pour le routeur. Une telle succession de retards est facilement réalisée à l'aide de fibres optiques de longueurs étagées qui constituent les éléments de retard. L'ensemble de ces fibres a été parfois appelé « mémoire tampon optique ».

Dans le cas donné en exemple où ce routeur doit alimenter une seule fibre de ligne aval, le nombre des ports intermédiaires est égal au nombre k des valeurs de retard du routeur.

Dans le cas où ce routeur devrait alimenter plusieurs fibres de ligne aval telles que FZ par l'intermédiaire d'autant d'unités de sortie, telles que les unités UZ du brasseur selon l'invention, il inclurait, pour chacune de ces unités, un nombre k de ports intermédiaires dont les retards auraient respectivement ces k valeurs.

Comme ceux du routeur de cette invention, les ports intermédiaires tels que PM du deuxième routeur connu représenté à la figure 4 incluent des éléments de retard tels que R qui leur donnent des retards respectifs prédéterminés. Entre ces ports et les ports d'entrée tels que PA, l'unité d'entrée de ce routeur est constituée par un multiplexeur M1. Entre ces ports intermédiaires et les ports de sortie tels que PZ qui alimentent des convertisseurs de longueur d'onde tels que RX, son unité de sortie est constituée par des sélecteurs de ports intermédiaires tels que S1 qui alimentent des sélecteurs de longueur d'onde tels que S2 raccordés chacun en série entre un démultiplexeur tel que D1 et un multiplexeur tel que M2. Chacun de ces divers sélecteurs est constitué par une pluralité d'interrupteurs optiques à semiconducteur en parallèle. Des pertes de lumière sensibles sont causées par des coupleurs optiques tels que B1, B2, et B3 qui raccordent les étages successifs constitués par les organes ci-dessus.

Le routeur de cette invention présente notamment l'avantage d'éviter les pertes causées par de tels coupleurs.

Comme celui du premier système de commutation réalisé selon cette invention, son étage secondaire EZ inclut au moins une unité de sortie et chaque telle unité est raccordée à une pluralité de ports intermédiaires tels que PM et à une pluralité de ports de sortie tels que PZ. Pour faciliter la compréhension du dessin, le système de commutation brasseur routeur représenté à la figure 5 inclut une seule telle unité UZ.

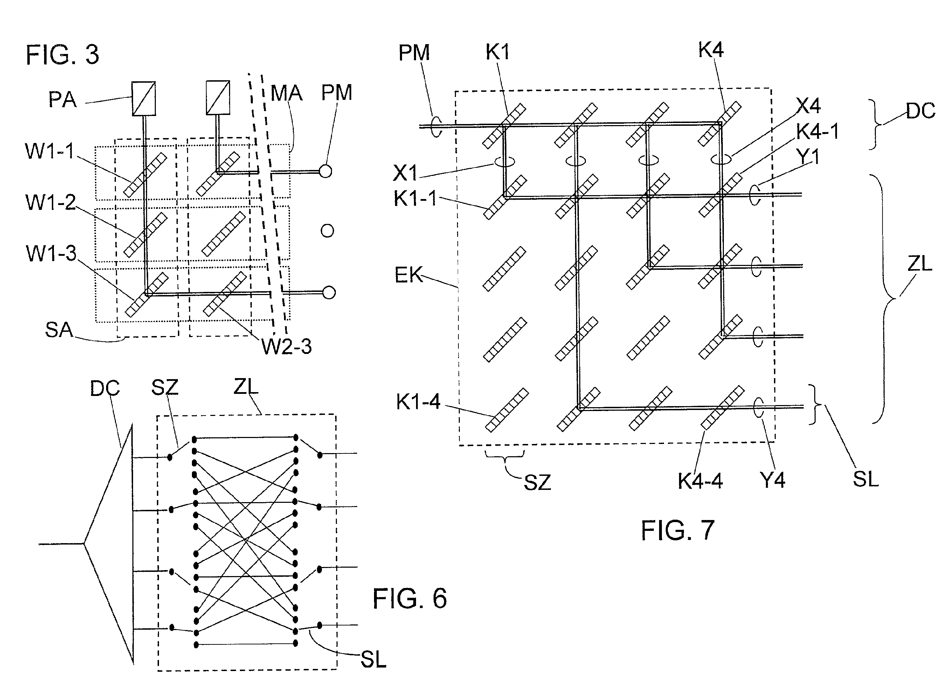

Chaque telle unité inclut un séparateur de longueurs d'onde tel que DC pour chacun des ports intermédiaires tels que PM raccordés à cette unité. Ce séparateur est affecté à ce port intermédiaire. Il a une entrée raccordée à ce port intermédiaire et une sortie pour chacune des longueurs d'onde de travail, cette sortie ayant cette longueur d'onde et étant apte à transmettre seulement ceux des paquets dont la longueur d'onde est cette longueur d'onde de travail. Dans l'exemple de la figure 6, il est réalisé sous la forme d'un démultiplexeur de type usuel.

Cette unité inclut aussi une matrice de sortie telle que ZL raccordée à ce séparateur de longueurs d'onde et affectée au même port intermédiaire que ce séparateur. Des éléments de cette matrice forment, pour chacune des sorties de ce séparateur de longueurs d'onde, un sélecteur de port, tel que le sélecteur SZ sur la figure 6 ou la colonne K1-1...K1-4 sur la figure 7. Ce sélecteur a la longueur d'onde de cette sortie. Par ailleurs il a d'une part une entrée constituant une entrée de cette matrice, telle que X1 sur la figure 7, et il a d'autre part une sortie pour chacun des ports de sortie raccordés à cette unité, cette sortie étant affectée à ce port de sortie. Il constitue un sélecteur de port de sortie.

Les éléments de cette matrice forment aussi , pour chacun des ports de sortie raccordés à cette unité, un sélecteur de longueur d'onde tel que le sélecteur SL sur la figure 6 ou la ligne K1-4...K4-4 sur la figure 7. Ce sélecteur a d'une part une entrée pour chacune des longueurs d'onde de travail, une coopération étant réalisée entre cette entrée et une sortie du sélecteur de ports de sortie ayant cette longueur d'onde. Cette coopération est telle que tout paquet passant par cette sortie passe aussi par cette entrée. Dans l'exemple de la figure 6, elle est réalisée par le fait que cette sortie est raccordée à cette entrée par un guide de lumière. Ce sélecteur de longueur d'onde a d'autre part une sortie constituant une sortie de cette matrice telle que Y1 sur la figure 7, cette sortie étant affectée à ce port de sortie.

L'unité de sortie UZ inclut en outre un sélecteur de port tel que SM pour chacun des ports de sortie tels que PZ qui sont raccordés à cette unité. Ce sélecteur constitue un sélecteur de port intermédiaire. Il a d'une part une entrée pour chacun des ports intermédiaires tels que PM raccordés à cette unité. Cette entrée est raccordée à l'une des sorties de la matrice de sortie telle que ZL affectée à ce port intermédiaire, cette sortie étant la sortie affectée à ce port de sortie. Ce sélecteur a d'autre part une sortie constituant ce port de sortie.

Typiquement ce port de sortie alimente un convertisseur de sortie tel que RX et plusieurs tels convertisseurs alimentent respectivement les entrées d'un multiplexeur non représenté dont la sortie alimente une fibre de ligne aval non représentée.

Chacun des sélecteurs de l'unité de sortie UZ peut être réalisé sous la forme d'un diffuseur ou d'un combineur dont les sorties ou les entrées, respectivement, sont munies chacune d'un interrupteur constitué par un amplificateur optique à semiconducteur.

En variante, chaque matrice de sortie telle que ZL peut être constituée comme celle qui est représentée à la figure 7 Les éléments de cette matrice sont aptes à recevoir et à transmettre des paquets. Ils incluent :
- les entrées de matrice telles que X1...X4, par exemple respectivement raccordées aux sorties du séparateur de longueurs d'onde tel que DC, pour recevoir des paquets en entrée de cette matrice,
- les sorties de matrice telles que Y1...Y4, par exemple raccordées à des entrées appartenant respectivement aux sélecteurs de port intermédiaire tels que SM, pour transmettre ces paquets en sortie de cette matrice, et
- des sélecteurs élémentaires tels que K1-1...K4-4. Ces sélecteurs ont des longueurs d'onde respectives. Ils reçoivent des ordres de sélection émis par le contrôleur H et ils sont chacun passif ou actif selon ces ordres
   Diverses successions de ces éléments constituent respectivement des rangées, certaines de ces rangées constituant des colonnes de cette matrice telles que la colonne X1,K1-1... K1-4, d'autres de ces rangées constituant des lignes de cette matrice telles que la ligne K1-4... K4-4, Y4. Un premier élément et des éléments suivants de chacune de ces colonnes sont respectivement constitués par une entrée de matrice telle que X1 et par des sélecteurs élémentaires tels que K1-1...K1-4. Des éléments précédents et un dernier élément de chacune de ces lignes sont respectivement constitués par certains de ces sélecteurs tels que K1-4...K4-4 et par une sortie de matrice telle que Y4. Chacun de ces sélecteurs est inclus dans l'une de ces colonnes et dans l'une de ces lignes.

Les sélecteurs élémentaires tels que K1-1...K4-4 réalisent des opérations de transmission interne qui constituent des transmissions passives ou des transmissions déviées conformes à la description qui a été précédemment donnée pour de telles opérations réalisées dans la matrice de prégroupage de la figure 3.

Les sélecteurs de port de sortie tels que SZ de la matrice de sortie sont respectivement constitués par les successions telles que K1-1...K1-4 de sélecteurs élémentaires respectivement incluses dans les colonnes de cette matrice. Les entrées de ces sélecteurs de port de sortie sont respectivement constituées par les entrées de matrice X1...X4 et les sorties de chacun de ces sélecteurs de port de sortie sont respectivement constituées par les sélecteurs élémentaires tels que K1-1...K1-4 inclus dans ce sélecteur de port. Les sélecteurs de longueur d'onde tels que SL de cette unité de sortie sont respectivement constitués par les successions telles que K1-4...K4-4 de sélecteurs élémentaires respectivement incluses dans les lignes de cette matrice. Les entrées de chacun de ces sélecteurs de longueur d'onde sont respectivement constituées par les sélecteurs élémentaires tels que K1-4...K4-4 inclus dans ce sélecteur de longueur d'onde. Les sorties de ces sélecteurs de longueur d'onde sont respectivement constituées par les sorties de matrice Y1...Y4. Enfin, chaque coopération entre une entrée d'un sélecteur de longueur d'onde et une sortie d'un sélecteur de ports de sortie est réalisée par le fait que cette entrée et cette sortie sont constituées par un même sélecteur élémentaire.

Typiquement les entrées de matrice telle que X1...X4 ont des longueurs d'onde respectives. Lorsqu'elles sont raccordées aux sorties du séparateur de longueurs d'onde telle que DC, elles ont respectivement les longueurs d'onde de ces sorties. Les sélecteurs élémentaires tels que K1-1...K4-4 ont alors eux aussi des longueurs d'onde respectives, chacun d'eux étant apte à réaliser une transmission déviée seulement lorsque sa longueur d'onde est égale à celle d'un paquet qu'il reçoit. Les éléments suivants tels que K1-1...K1-4 de chacune des colonnes sont constitués par des sélecteurs élémentaires ayant la longueur d'onde de l'entrée de matrice telle que X1 qui constitue le premier élément de cette colonne.

Lorsque ce routeur inclut des commutateurs électroholographiques ayant des longueurs d'onde respectives, chacun des sélecteurs élémentaires tels que K1-1,...K4-4 de la matrice de sortie ZL est alors avantageusement constitué par l'un de ces commutateurs, ce sélecteur ayant la longueur d'onde de ce commutateur et étant actif lorsque ce commutateur est actif.

Chaque séparateur de longueurs d'onde tel que DC peut avantageusement être constitué par une ligne de lames sélectives telles que K1...K4. Ces lames sont transparentes et disposés optiquement en série. Elles ont des longueurs d'onde respectives pour dévier sélectivement les paquets ayant ces longueurs d'onde. Ce sont par exemple des commutateurs électroholographiques qui sont maintenus actifs en permanence. Leurs longueurs d'onde sont respectivement celles des sorties de ce séparateur, grâce à quoi elles constituent respectivement ces sorties.

L'ensemble des sélecteurs élémentaires tels que K1-1,...K4-4 et des lames sélectives telles que K1...K4 peut avantageusement être formé sur un substrat commun tel que EK.

## Revendications

1. Système de commutation optique tel que brasseur ou routeur pour réseau de transmission, ce système de commutation incluant un étage primaire (EA) pour distribuer des signaux ayant des longueurs d'onde respectives à une pluralité d'entrées d'un étage secondaire (EZ) de ce système de commutation, cet étage secondaire utilisant notamment ces longueurs d'onde pour sélectionner pour chacun de ces signaux au moins une route parmi une pluralité de routes internes, chacune de ces routes internes traversant ce système de commutation et incluant pour cela un **segment primaire** (VA) inclus dans cet étage primaire et un **segment secondaire** (VZ) inclus dans cet étage secondaire, cet étage secondaire se laissant traverser par ces signaux seulement selon les dits segments secondaires des routes internes respectivement sélectionnées pour eux, ledit étage primaire orientant sélectivement ces signaux sur les segments primaires de celles des dites routes internes qui sont sélectionnées pour eux ; ce système de commutation étant adapté à être inclus dans un réseau de transmission d'informations acheminant des dits signaux, chacun de ces signaux portant des informations à transmettre et étant muni d'une **étiquette**, ce système de commutation ayant une succession de **longueurs d'onde de travail** et incluant :
- une pluralité de **ports** recevant des dits signaux en entrée de ce système et constituant respectivement des **ports d'entrée** (PA), ces ports ayant des longueurs d'onde respectives constituées chacune par l'une des dites longueurs d'onde de travail, chacun de ces ports répondant à la réception de chaque dit signal d'abord en faisant porter ce signal par une onde optique ayant ladite longueur d'onde de ce port, puis en transmettant dans ce système ce signal porté par cette onde, ladite longueur d'onde de cette onde constituant ladite longueur d'onde de ce paquet, ces ports formant au moins un **groupe de ports d'entrée**, chaque dit groupe de ports d'entrée incluant plusieurs de ces ports, les dites longueurs d'onde des divers ports de chaque dit groupe de ports d'entrée étant mutuellement différentes,
- une pluralité de ports constituant respectivement **des ports intermédiaires** (PM), ces ports formant au moins un groupe de ports intermédiaires, chaque dit groupe de ports intermédiaires incluant plusieurs de ces ports et étant associé à un dit groupe de ports d'entrée,
- une pluralité de ports constituant respectivement **des ports de sortie** (PZ),
- des segments de route constituant une pluralité de dits **segments primaires** (VA) et une pluralité de dits **segments secondaires** (VZ), chacun de ces segments ayant une longueur d'onde constituée par l'une des dites longueurs d'onde de travail, ce segment reliant mutuellement deux dits ports de manière à pouvoir transmettre de l'un à l'autre de ces deux ports des dits signaux ayant cette longueur d'onde, ces deux ports constituant respectivement un **port amont** et un **port aval** de ce segment, les dits ports amont et aval de chaque dit segment primaire étant respectivement un dit port d'entrée et un dit port intermédiaire, un **groupe de segments primaires** incluant plusieurs de ces segments primaires étant associé à chaque dit groupe de ports d'entrée et au dit groupe de ports intermédiaires associé à ce groupe de ports d'entrée, ce groupe de segments primaires reliant chacun des ports de ce groupe de ports d'entrée à chacun des ports de ce groupe de ports intermédiaires, les dits port amont et port aval de chaque dit segment secondaire étant respectivement un dit port intermédiaire et un dit port de sortie, chacun des dits ports intermédiaires étant relié à une pluralité au moins partielle de dits ports de sortie respectivement par une pluralité au moins partielle de dits segments secondaires, chacun des dits ports de sortie étant relié à une pluralité au moins partielle de dits ports intermédiaires respectivement par une pluralité au moins partielle de dits segments secondaires,
- un **contrôleur** (H) apte à répondre à ladite étiquette de chaque signal reçu par chaque dit port d'entrée en fournissant un **ordre de sélection** associé à ce signal et désignant la dite longueur d'onde de ce signal et au moins une paire de ports, chaque paire de ports désignée par cet ordre étant constituée par un dit port intermédiaire et par un dit port de sortie, grâce à quoi chacun de ces deux ports est lui aussi désigné par cet ordre, et
- **des moyens de sélection** de route inclus dans ledit étage secondaire et formant une pluralité de **sélecteurs de ports** (SP) et une pluralité de **sélecteurs de longueur d'onde** (SC); des moyens de sélection de route étant aussi inclus dans ledit étage primaire (EA) et formant une pluralité de **sélecteurs primaires** (SA), chacun de ces sélecteurs primaires conditionnant plusieurs dits segments primaires (VA) ayant un même dit port amont constitué par un dit port d'entrée (PA) et constituant un port amont de ce sélecteur, ce sélecteur ayant plusieurs dits ports aval respectivement constitués par plusieurs dits ports intermédiaires (PM) et constituant respectivement des ports aval de ces segments, ce sélecteur étant apte à recevoir chaque dit ordre de sélection désignant l'un au moins de ses dits ports aval et à répondre à cet ordre en sélectionnant chaque dit segment primaire reliant ledit port amont de ce sélecteur à chaque dit port aval appartenant à ce sélecteur et désigné par cet ordre, ces moyens de sélection de route étant tels que chaque dit segment primaire transmet à son dit port aval chaque dit signal reçu par son dit port amont sélectivement lorsque ce segment est sélectionné par chaque dit sélecteur primaire conditionnant ce segment, chacun des segments (VA) de chaque dit groupe de segments primaires étant conditionné par au moins un dit sélecteur primaire (SA), grâce à quoi ceux des dits sélecteurs primaires qui conditionnent les segments de ce groupe constituent avec ces segments une **unité de prégroupage** (UA) transmettant chaque dit signal reçu par elle sélectivement à chaque dit port intermédiaire (PM) via lequel ce signal doit traverser ce système de commutation, cette unité étant associée à ce groupe de segments et aux dits groupe de ports d'entrée et groupe de ports intermédiaires associés à ce groupe de segments, les ports de ce groupe de ports d'entrée et de ce groupe de ports intermédiaires constituant respectivement des ports d'entrée et des ports intermédiaires de cette unité ;chaque dite unité de prégroupage (UA) incluant :
- un dit **sélecteur primaire** (SA) pour chacun des dits ports d'entrée (PA) de cette unité, ce sélecteur ayant une entrée raccordée à ce port d'entrée et ayant une sortie pour chacun des dits ports intermédiaires (PM) de cette unité, cette sortie étant associée à ce port intermédiaire, ce sélecteur étant apte à répondre à chaque dit ordre de sélection désignant l'un de ces ports intermédiaires en raccordant cette entrée à celle de ces sorties qui est associée à ce port intermédiaire, et
- un **organe de groupage** (MA) pour chaque dit port intermédiaire de cette unité, cet organe ayant une sortie raccordée à ce port intermédiaire et ayant une entrée pour chaque dit sélecteur primaire de cette unité, cette entrée étant raccordée à celle des dites sorties de ce sélecteur qui est associée à ce port intermédiaire, cet organe raccordant cette sortie à chacune de ces entrées ;
ce système étant **Caractérisé par le fait que** chaque dit organe de groupage est un **multiplexeur** (MA), les dites entrées de ce multiplexeur ayant des longueurs d'onde respectives et étant respectivement raccordées à des dites sorties de sélecteurs primaires (SA) ayant des entrées raccordées à des ports d'entrée (PA) ayant ces longueurs d'onde.

2. Système de commutation selon la revendication 1, ce système étant **caractérisé par le fait que** ladite unité de prégroupage (UA)est formée dans une matrice de prégroupage incluant des sélecteurs élémentaires (W1-1... W2-3), ces sélecteurs étant aptes à recevoir et à transmettre les dits signaux et étant aussi aptes à recevoir des dits ordres de sélection et à être chacun dans un état passif ou dans un état actif selon ces ordres, ces sélecteurs ayant des longueurs d'onde respectives et formant des successions définissant respectivement des rangées de cette matrice, certaines de ces rangées constituant des colonnes de cette matrice, des premiers éléments de ces colonnes étant respectivement constitués par les dits ports d'entrée (PA) de cette unité et des éléments suivants de chacune de ces colonnes étant respectivement constitués par les sélecteurs de l'une de ces successions (W1-1...W1-3), d'autres de ces rangées (W1-3, W2-3...) constituant des lignes de cette matrice, des premiers éléments de chacune de ces lignes étant respectivement constitués par les sélecteurs de l'une de ces successions (W1-3, W2-3...) et des derniers éléments de ces lignes étant respectivement constitués par les dits ports intermédiaires de cette unité, chacun des dits sélecteurs élémentaires étant inclus dans l'une des dites colonnes et dans l'une des dites lignes de la matrice, chacun de ces sélecteurs élémentaires constituant provisoirement un sélecteur récepteur lorsqu'il reçoit un dit signal, ce signal constituant un signal reçu, ce sélecteur récepteur appartenant à deux dites rangées et ce signal reçu lui étant transmis par un élément précédant ce sélecteur récepteur dans de l'une de ces deux rangées, ce sélecteur récepteur répondant à la réception de ce signal reçu en réalisant une opération de transmission interne transmettant ce signal à l'élément suivant ce sélecteur récepteur dans l'une de ces deux rangées, ladite rangée de cet élément suivant étant la même que celle de cet élément précédant et cette opération de transmission interne constituant une transmission passive lorsque ce sélecteur récepteur est passif et/ou sa longueur d'onde est différente de celle du dit signal reçu, la rangée de cet élément suivant étant différente de celle de cet élément précédant et cette opération de transmission interne constituant une transmission déviée lorsque à la fois ce sélecteur récepteur est actif et sa longueur d'onde est celle du dit signal reçu, grâce à quoi les dits sélecteurs primaires (SA) de ladite unité de prégroupage (UA) sont respectivement constitués par les dites colonnes de la matrice de prégroupage, les dites sorties de chacun de ces sélecteurs primaires étant respectivement constituées par les dits sélecteurs élémentaires inclus dans ce sélecteur primaire, les dits organes de groupage (MA) de cette unité étant respectivement constitués par les dites successions de sélecteurs élémentaires (W1-3, W2-3...) respectivement incluses dans les dites lignes de cette unité, les dites entrées de chacun de ces organes de groupage étant respectivement constituées par les dits sélecteurs élémentaires inclus dans cet organe de groupage.

3. Système de commutation selon la revendication 1, ce système étant **caractérisé par le fait que** ledit étage primaire (EA) inclut un nombre plus grand que un de dites unités de prégroupage (UA), ces unités étant respectivement associées au même nombre de dits groupes de ports d'entrée (GA) et au même nombre de dits groupes de ports intermédiaires (GM), ce système de commutation constituant un brasseur de circuits.

4. Système de commutation selon la revendication 1, ce système étant **caractérisé par le fait que** ledit étage secondaire (EZ) inclut une pluralité d'unités de sortie (UZ), chacune de ces unités incluant au moins un dit organe de groupage (MA) pour chacune de ces unités de sortie (UZ), cet organe étant associé à cette unité de sortie, ce système constituant un brasseur de circuits.

5. Système de commutation selon la revendication 1, ce système étant **caractérisé par le fait que** le dit étage secondaire (EZ) inclut au mois une unité de sortie (UZ), chaque dite unité de sortie étant raccordée à une pluralité de dits ports intermédiaires (PM) et à une pluralité de dits ports de sortie (PZ) et incluant :
- un diffuseur (B) pour chacun des dits ports intermédiaires raccordés à cette unité, ce diffuseur ayant une entrée raccordée à ce port intermédiaire et ayant une sortie pour chacun des dits ports de sortie raccordés à cette unité,
- un dit sélecteur de port (SP) pour chacun des dits ports de sortie raccordés à cette unité, ce sélecteur ayant une entrée pour chacun des dits diffuseurs de cette unité, cette entrée étant raccordée à ce diffuseur, ce sélecteur ayant en outre une sortie, et
- un dit sélecteur de longueur d'onde (SC) pour chacun des dits sélecteurs de port de cette unité, ce sélecteur de longueur d'onde ayant d'une part une entrée raccordée à ladite sortie de ce sélecteur de port et ayant d'autre part une sortie, cette sortie constituant une sortie de cette unité de sortie et un dit port de sortie raccordé à cette unité,
ce système constituant un brasseur de circuits.

6. Système de commutation selon la revendication 1, ce système étant **caractérisé par le fait que** les dits ports intermédiaires (PM) incluent des éléments de retard (R) leur donnant des retards ayant des valeurs respectives prédéterminées, ces valeurs appartenant à une succession de valeurs de retard de ce système de commutation, grâce à quoi chacun de ces ports est apte à appliquer à chacun des dits signaux qui passent par ce port un retard égal au dit retard de ce port, ces signaux constituant des paquets, ce système de commutation constituant un routeur pour ces paquets.

7. Système de commutation selon la revendication 1, ce système étant **caractérisé par le fait que** ledit étage secondaire (EZ) inclut au moins une unité de sortie (UZ), chaque dite unité de sortie étant raccordée à une pluralité de dits ports intermédiaires (PM) et à une pluralité de dits ports de sortie (PZ) et incluant :
- un séparateur de longueurs d'onde (DC) pour chacun des dits ports intermédiaires raccordés à cette unité, ce séparateur étant affecté à ce port intermédiaire (PM), ce séparateur ayant une entrée raccordée à ce port intermédiaire et une sortie pour chacune des dites longueurs d'onde de travail, cette sortie ayant cette longueur d'onde et étant apte à transmettre seulement ceux des dits signaux dont la dite longueur d'onde est cette longueur d'onde de travail, et
- une matrice de sortie (ZL) raccordée à ce séparateur de longueurs d'onde et affectée au même port intermédiaire que ce séparateur, des éléments de cette matrice formant les organes suivants :
- un dit sélecteur de port (SZ, fig.6 - X1, K1-1...K1-4, fig.7) pour chacune des dites sorties de ce séparateur de longueurs d'onde, ce sélecteur ayant d'une part une entrée (X1) ayant la dite longueur d'onde de cette sortie et constituant une entrée de cette matrice, ce sélecteur ayant d'autre part une sortie pour chacun des ports de sortie (PZ) raccordés à cette unité, cette sortie étant affectée à ce port de sortie, ce sélecteur constituant un sélecteur de port de sortie, et
- un dit sélecteur de longueur d'onde (SL, fig.6 - K1-4...K4-4,Y4, fig.7) pour chacun des dits ports de sortie raccordés à cette unité, ce sélecteur ayant d'une part une entrée pour chacune des dites longueurs d'onde de travail, une coopération étant réalisée entre cette entrée et une dite sortie du sélecteur de ports de sortie ayant cette longueur d'onde, cette coopération étant telle que tout dit signal passant par cette sortie passe aussi par cette entrée, ce sélecteur de longueur d'onde ayant d'autre part une sortie (Y4) constituant une sortie de cette matrice, cette sortie étant affectée à ce port de sortie,
cette unité de sortie incluant en outre un dit sélecteur de port (SM) pour chacun des dits ports de sortie (PZ) raccordés à cette unité, ce sélecteur ayant une entrée pour chacun des dits ports intermédiaires (PM) raccordés à cette unité, cette entrée étant raccordée à l'une des dites sorties de la matrice de sortie (ZL) affectée à ce port intermédiaire, cette sortie étant la sortie affectée à ce port de sortie, ce sélecteur ayant une sortie constituant ce port de sortie, ce sélecteur constituant un sélecteur de port intermédiaire affecté à ce port de sortie, les dits signaux constituant des paquets, ce système constituant un routeur pour ces paquets.

8. Système de commutation selon la revendication 7, ce système étant **caractérisé par le fait que** ladite matrice de sortie (ZL) est constituée par des éléments de matrice aptes à recevoir et à transmettre des dits paquets, ces éléments incluant :
- les dites entrées de matrice (X1...X4) pour recevoir des dits paquets en entrée de cette matrice, ces entrées ayant des longueurs d'onde respectives,
- les dites sorties de matrice (Y1...Y4) pour transmettre ces paquets en sortie de cette matrice, et
- des sélecteurs élémentaires (K1-1...K4-4), ces sélecteurs étant aptes à recevoir et à transmettre les dits signaux et étant aussi aptes à recevoir des dits ordres de sélection et à être chacun dans un état passif ou dans un état actif selon ces ordres, ces sélecteurs ayant des longueurs d'onde respectives et formant des successions définissant respectivement des rangées de cette matrice, certaines de ces rangées constituant des colonnes de cette matrice, des premiers éléments de ces colonnes étant respectivement constitués par les dites entrées de matrice (X1...X4) et des éléments suivants de chacune de ces colonnes étant respectivement constitués par les sélecteurs de l'une de ces successions (K1-1...K4-1), d'autres de ces rangées constituant des lignes de cette matrice, des premiers éléments de chacune de ces lignes étant respectivement constitués par les sélecteurs de l'une de ces successions (K1-4...K4-4) et des derniers éléments de ces lignes étant respectivement constitués par les dites sorties de matrice (Y1...Y4), chacun des dits sélecteurs élémentaires étant inclus dans l'une des dites colonnes et dans l'une des dites lignes de la matrice, chacun de ces sélecteurs élémentaires constituant provisoirement un sélecteur récepteur lorsqu'il reçoit un dit signal, ce signal constituant un signal reçu, ce sélecteur récepteur appartenant à deux dites rangées et ce signal reçu lui étant transmis par un élément précédant ce sélecteur récepteur dans de l'une de ces deux rangées, ce sélecteur récepteur répondant à la réception de ce signal reçu en réalisant une opération de transmission interne transmettant ce signal à l'élément suivant ce sélecteur récepteur dans l'une de ces deux rangées, ladite rangée de cet élément suivant étant la même que celle de cet élément précédant et cette opération de transmission interne constituant une transmission passive lorsque ce sélecteur récepteur est passif et/ou sa longueur d'onde est différente de celle du dit signal reçu, la rangée de cet élément suivant étant différente de celle de cet élément précédant et cette opération de transmission interne constituant une transmission déviée lorsque à la fois ce sélecteur récepteur est actif et sa longueur d'onde est celle du dit signal reçu,.grâce à quoi les dits sélecteurs de port de sortie (SZ) de ladite matrice de sortie (ZL) sont respectivement constitués par les successions (K1-1...K1-4) de dits sélecteurs élémentaires respectivement incluses dans les dites colonnes de cette matrice, les dites entrées de ces sélecteurs de port de sortie étant respectivement constituées par les dites entrées de matrice, les dites sorties de chacun de ces sélecteurs de port de sortie étant respectivement constituées par les dits sélecteurs élémentaires inclus dans ce sélecteur de port de sortie, les dits sélecteurs de longueur d'onde de cette matrice étant respectivement constitués par les successions (K1-4...K4-4) de dits sélecteurs élémentaires respectivement incluses dans les dites lignes de cette matrice, les dites entrées de chacun de ces sélecteurs de longueur d'onde étant respectivement constituées par les dits sélecteurs élémentaires inclus dans ce sélecteur de longueur d'onde, les dites sorties de ces sélecteurs de longueur d'onde étant respectivement constituées par les dites sorties de matrice, chaque dite coopération entre une entrée d'un sélecteur de longueur d'onde et une sortie d'un sélecteur de ports de sortie étant réalisée **par le fait que** cette entrée et cette sortie sont constituées par un même dit sélecteur élémentaire.

9. Système de commutation selon la revendication 7, ce système étant **caractérisé par le fait que** ledit séparateur de longueurs d'onde (DC) est constitué par une ligne de lames sélectives (K1...K4), ces lames étant transparentes et disposées optiquement en série et ayant. des longueurs d'onde respectives pour dévier sélectivement les paquets ayant ces longueurs d'onde, les dites sorties de ce séparateur étant respectivement constituées par ces lames.

10. Système de commutation selon l'une quelconque des revendications 2 et 9, ce système étant **caractérisé par le fait que** les dits sélecteurs élémentaires (W1-1... W2-3..., K1-1,...K4-4) sont respectivement constitués par des commutateurs électroholographiques.
